# EUROPEAN PATENT APPLICATION

(11) **EP 4 383 367 A1**
(43) Date of publication of application: **12.06.2024**
(21) Application number: 23211408.2
(22) Date of filing: 22.11.2023
(51) Int. Cl.: H01M 4/134, H01M 4/1395, H01M 4/36, H01M 10/0565, H01M 4/40, H01M 10/052, H01M 10/0562, H01M 4/02

(54) **MATERIALS FOR ANODE, ANODE COATING, AND ANODE INTERLAYER USED IN METAL BATTERIES**

(30) Priority: 08.12.2022 US 202263431171 P; 08.03.2023 US 202318180747
(71) Applicant: Samsung Electronics Co., Ltd., Suwon-si, Gyeonggi-do 16677 (KR)
(72) Inventor: LACIVITA, Valentina, San Jose, CA, 95134 (US); MAURANO, Andrea, San Jose, CA, 95134 (US); CHANG, WonSeok, San Jose, CA, 95134 (US); GIBSON, James, San Jose, CA, 95134 (US); LI, Ju, San Jose, CA, 95134 (US); KIM, SoYeon, San Jose, CA, 95134 (US)
(74) Representative: Kuhnen & Wacker Patent- und Rechtsanwaltsbüro PartG mbB

(57) **Abstract**

A metal battery including: a cathode; an anode; and an electrolyte between the cathode and the anode; wherein the anode includes a metal alloy including a plurality of elements and the metal alloy has a melting temperature lower than melting temperatures of each of the plurality of elements.

## Description

### BACKGROUND

### 1. Field

Embodiments of the present disclosure described herein are related to materials for anode, anode coating, and anode interlayer utilized in metal batteries.

### 2. Description of the Related Art

The primary components of metal batteries may include a cathode, an anode, and an electrolyte between the cathode and the anode. The anode may also include an anode active (e.g., an anode active material), an anode base (e.g., a metal foil or a metal foam), an anode interlayer (e.g., a layer between the anode and the electrolyte), and an anode coating (e.g., a coating layer on the surface of the anode active material). One or more suitable materials may be utilized for each of these components. For example, a metal battery may incorporate an anode including an anode active, an anode base, an anode interlayer, and an anode coating that are each composed of Lithium or a Lithium alloy due to the high energy density of Lithium metal batteries. Additionally, given the high energy density property of Lithium, high-capacity Lithium metal batteries are becoming more important.

However, a challenge facing Lithium metal batteries is controlling Lithium plating and stripping within the anode (e.g., addition or subtraction of Lithium atoms resulting from the electrochemistry of the metal battery). Lack of control of such Lithium plating and stripping may result in inhomogeneous (e.g., heterogeneous) Lithium deposition on a surface of the electrode. Heterogeneous Lithium deposition can cause contact losses as well as the germination of Lithium dendrites through the electrolyte, which can further lead to metal battery capacity fading and/or fast death of the metal battery. Materials for the anode, the anode interlayer, and the anode coating may be selected that may provide for a more substantially homogenous Lithium deposition on a surface of the anode during Lithium plating and stripping.

### SUMMARY

Aspects of embodiments of the present disclosure are directed toward materials for anode, anode coating, and anode interlayer utilized in metal batteries.

Additional aspects will be set forth in part in the description which follows and, in part, will be apparent from the description, or may be learned by practice of the presented embodiments of the disclosure.

Some example embodiments of the present disclosure may include a metal battery including: a cathode; an anode; and an electrolyte between the cathode and the anode; wherein the anode includes a metal alloy including a plurality of elements and the metal alloy has a melting temperature lower than melting temperatures of each of the plurality of elements.

According to some example embodiments, the anode includes an anode active, an anode interlayer, and an anode coating.

According to some example embodiments, the anode active, the anode interlayer, and the anode coating include the metal alloy.

According to some example embodiments, the electrolyte includes a solid-state electrolyte.

According to some example embodiments, the metal alloy includes a Lithium-Silver alloy.

According to some example embodiments, the Lithium-Silver alloy includes about 90% Lithium and about 10% Silver by weight of the Lithium-Silver alloy.

According to some example embodiments, the anode includes a Lithium-Cerium alloy.

According to some example embodiments, the Lithium-Cerium alloy includes about 90% Lithium and about 10% Cerium by weight of the Lithium-Cerium alloy.

According to some example embodiments, the metal alloy has a homologue temperature greater than 0.65.

Some example embodiments of the present disclosure may include a method for forming a metal battery including an anode, a cathode, and an electrolyte, the method including: selecting a cathode; selecting an electrolyte; selecting an anode including a metal alloy including a plurality of elements and the metal alloy has a melting temperature lower than melting temperatures of each of the plurality of elements; and stacking the electrolyte between the anode and the cathode to form the metal battery.

According to some example embodiments, the anode further includes an anode active, an anode interlayer, and an anode coating.

According to some example embodiments, the anode active, the anode interlayer, and the anode coating include the metal alloy.

According to some example embodiments, the electrolyte includes a solid-state electrolyte.

According to some example embodiments, the metal alloy includes a Lithium-Silver alloy.

According to some example embodiments, the Lithium-Silver alloy includes about 90% Lithium and about 10% Silver by weight of the Lithium-Silver alloy.

According to some example embodiments, the metal alloy includes a Lithium-Cerium alloy.

According to some example embodiments, the Lithium-Cerium alloy includes about 90% Lithium and about 10% Cerium by weight of the Lithium-Cerium alloy.

According to some example embodiments, the metal alloy has a homologue temperature greater than 0.65

Some example embodiments of the present disclosure may include an anode for a Lithium metal battery including: an anode active; an anode interlayer; and an anode coating, wherein anode active, the anode interlayer, and the anode coating include a Lithium alloy including a composition with a melting temperature lower than the melting temperature of pure Lithium.

According to some example embodiments, the Lithium alloy includes a Lithium-Cerium alloy including about 90% Lithium and about 10% Cerium by weight of the Lithium-Cerium alloy.

### BRIEF DESCRIPTION OF THE DRAWINGS

The above and other aspects, features, and advantages of certain embodiments of the disclosure will be more apparent from the following description taken in conjunction with the accompanying drawings, in which:
FIGS. 1A - 1C show diagrams of a metal battery according to an embodiment of the present disclosure.
FIG. 2A shows a Lithium-Silver (Li-Ag) phase diagram.
FIG. 2B shows a Lithium-Cerium (Li-Ce) phase diagram.
FIG. 3 is a graph showing alloying elements that have a eutectic temperature lower than the melting temperature of pure Lithium according to an embodiment of the present disclosure.
FIG. 4 shows a modified image of a periodic table that includes elements with a high ΔEu according to an embodiment of the present disclosure.
FIG. 5A shows microscopic images of Cerium powder.
FIG. 5B shows microscopic images of Cerium pellet.
FIG. 6 is a flowchart for forming a metal battery according to an embodiment of the present disclosure
FIG. 7 shows metal battery configurations observed in Example 1.
FIG. 8A shows a chart of lithiation overpotential measurements for each of the metal battery cell configurations observed in Example 1.
FIG. 8B shows a graph of lithiation overpotential and Lithium nucleation overpotential measurements in Example 1 over time.
FIG. 8C shows a graph of nucleation overpotential measurements for each of the metal battery cell configurations observed in Example 1.
FIG. 8D shows a chart of nucleation overpotential measurements for each of the metal battery cell configurations observed in Example 1.
FIG. 9 shows metal battery cell configurations observed in Example 2.
FIG. 10 shows a chart of nucleation overpotential measurements for each of the metal battery cell configurations observed in Example 2.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list.

Because the present disclosure to be described may be variously modified and may have one or more suitable embodiments, specific embodiments are illustrated in the drawings and described in more detail in the detailed description. However, this is not intended to limit the present disclosure to a specific embodiment, and it should be understood to include all modifications, equivalents, or substitutes included in the technical scope of the present disclosure.

The terms utilized are only utilized to describe specific embodiments and are not intended to limit the present disclosure. Singular expressions include plural expressions unless the context clearly indicates otherwise. Hereinafter, it will be further understood that the terms "comprise", "include" or "have," when utilized in this specification, specify the presence of stated features, integers, steps, operations, elements, and/or components, but do not preclude the presence or addition of one or more other features, integers, steps, operations, elements, components, and/or groups thereof. The "/" utilized herein may be interpreted as "and" or as "or" depending on the situation.

In the drawings, thickness is enlarged or reduced in order to clearly express one or more suitable layers and regions. Throughout the specification, when a component such as a layer, a film, a region, or a plate is mentioned to be placed "on" another component, it will be understood that it may be directly on another component or that another component may be interposed therebetween. Throughout the specification, although the terms "first", "second", "third", etc., may be utilized herein to describe one or more suitable elements, components, regions, and/or layers, these elements, components, regions, and/or layers should not be limited by these terms. These terms are only utilized to distinguish one component from another component.

One or more embodiments of the present disclosure are directed toward materials that can be utilized for an anode (e.g., a porous anode) including an anode active, an anode base, an anode interlayer, and an anode coating in a metal battery (e.g., Lithium metal battery). In some embodiments, the anode active, the anode interlayer, and the anode coating may include (e.g., may each include or be formed of) a metal alloy (e.g., a binary metal alloy, a ternary metal alloy, and a quaternary metal alloy, etc.) that can provide a more substantially homogenous Lithium deposition on a surface of the anode during Lithium plating and stripping within the anode. Metal alloys that exhibit such properties may be selected by comparing a melting temperature (e.g., a melting point) of the alloy to the melting temperatures of each of the elements of the alloys in their pure forms.

In some embodiments, the metal battery may include an anode including an anode active, an anode interlayer, and an anode coating that are each made up of Lithium or a Lithium alloy in the anode. In some embodiments, the Lithium alloy utilized for the anode active, the anode interlayer, and/or anode coating may have a melting temperature (e.g., a eutectic temperature) that is lower than a melting temperature of pure Lithium (e.g., 181°C). The material of each of the anode active, the anode interlayer, and the anode coating may be the same or different from each other.

In some embodiments, the anode active, the anode interlayer, and/or the anode coating may include a Lithium-Silver alloy. In some embodiments, the Lithium-Silver alloy may have about 90% Lithium and about 10% Silver by weight of the Lithium-Silver alloy.

In some embodiments, the anode active, the anode interlayer, and/or the anode coating may include a Lithium-Cerium alloy. In some embodiments, the Lithium-Cerium alloy may have about 90% Lithium and about 10% Cerium by weight of the Lithium-Cerium alloy.

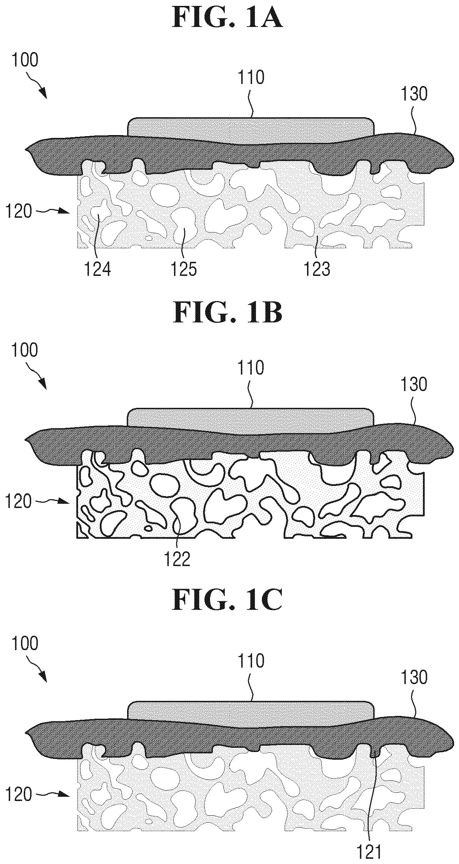

FIGS. 1A to 1C show diagrams of a metal battery according to an embodiment of the present disclosure.

Referring to FIGS. 1A to 1C, a metal battery 100 may include a cathode 110, an anode 120 (e.g., a porous anode), and an electrolyte 130 located between the cathode 110 and anode 120. In some embodiments, the anode 120 may include an anode active 125, an anode base 123 having a plurality of pores 124 (e.g., housing the anode active 125), an anode interlayer 121 (e.g., a layer between the anode and the electrolyte), and an anode coating 122 (e.g., a coating layer on the surface of the anode active 125). In more detail and as shown in FIGS. 1A to 1C, the anode coating 122 is coated on the anode active 125 within the plurality of pores 124, and the anode interlayer 121 is interposed between the anode coating 122 and the electrolyte 130. In some embodiments, the electrolyte 130 may include a liquid electrolyte or solid electrolyte (e.g., solid-state electrolyte). In some embodiments, the metal battery 100 may include or be one or more Lithium metal batteries (e.g., Lithium ion battery, Lithium solid battery, Lithium air battery, etc). Lithium metal batteries may have (e.g., may each have) an anode 120 including an anode active 125, an anode interlayer 121, and an anode coating 122 that are each made up of Lithium or Lithium-based alloys.

Lithium metal batteries have an inherent challenge of controlling Lithium plating and stripping within the anode 120. The lack of control over Lithium plating and stripping within the anode can lead to heterogeneous Lithium deposition on a surface of the anode. Heterogeneous Lithium deposition can create uneven conductance between the anode and the electrolyte, which can further lead to Lithium metal battery capacity fading and/or fast death of the Lithium metal battery.

This issue may be addressed by selecting Lithium alloys for the anode active 125, the anode interlayer 121, and the anode coating 122 that have properties similar to a liquid Lithium. Liquid Lithium has suitable properties in terms of plating and stripping. For example, liquid Lithium may create homogeneous plating and stripping, which address many of the challenges with Lithium metal and may lead to a longer battery life. Accordingly, Lithium batteries that include Lithium alloys that more closely resemble liquid Lithium properties can also have suitable properties in terms of plating and stripping.

Selection criteria can be utilized to select metal alloys (e.g., binary metal alloys, ternary metal alloys, quaternary metal alloys, etc.) for the anode active 125, the anode interlayer 121, and the anode coating 122 that incorporate such properties. In some embodiments, a metal alloy may be selected that has a melting temperature that is lower than the melting temperatures of each of the individual pure elements making up the metal alloy (e.g., eutectic point criteria). The eutectic point selection criteria will be described in more detail.

Eutectic alloys include alloys that have a lower melting temperature at any composition than either of the pure components. The specific composition (e.g., the specific weight percent of each element in the composition) of the eutectic alloys is called a eutectic composition. The melting temperature of the eutectic alloy is called the eutectic temperature. The eutectic point criteria can be utilized to select metal alloys for the anode active 125, the anode interlayer 121, and the anode coating 122. Phase diagrams may be utilized to identify eutectic alloys as well as their eutectic compositions and eutectic temperatures. In some embodiments, the composition utilized for the anode active 125, the anode interlayer 121, and the anode coating 122 may include a eutectic composition with eutectic temperature that is lower than the melting temperature of pure Lithium (e.g., 181°C).

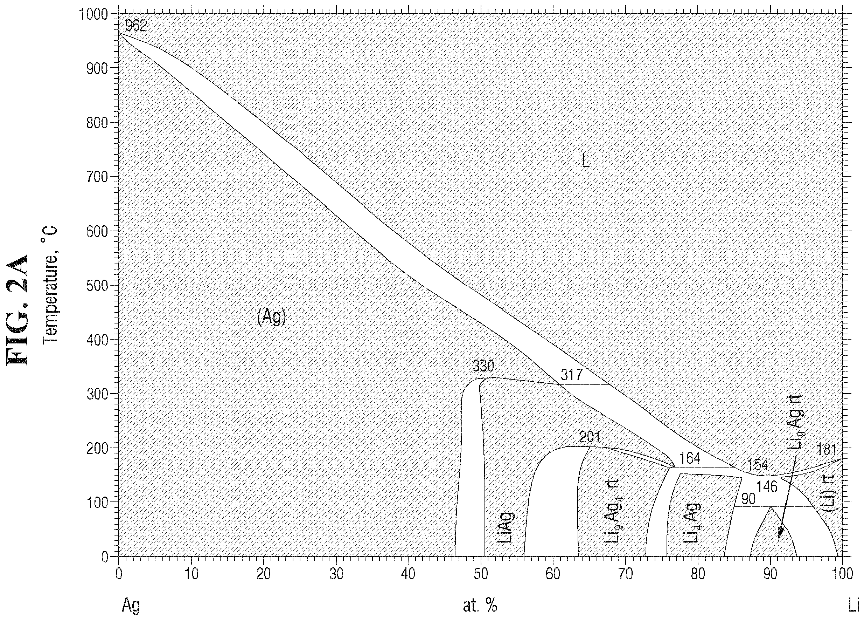

FIG. 2A shows a Lithium-Silver (Li-Ag) phase diagram.

Referring to FIG. 2A, the eutectic temperature and the eutectic composition of the Li-Ag alloy can be identified. For example, the Li-Ag phase diagram shows that the eutectic composition is about 90% Li and about 10% Ag and that the eutectic temperature is about 154°C, which is lower than the melting temperature of pure Lithium (e.g., 181 °C). Accordingly, a Li-Ag alloy may be the metal alloy utilized in the anode active 125, the anode interlayer 121, and/or the anode coating 122 based on the eutectic point criteria. In some embodiments, the Li-Ag alloy may include about 90% Li and about 10% Ag by weight of the Li-Ag alloy. The metal alloy composition of the anode active 125, the anode interlayer 121, and the anode coating 122 may be the same or may be different from each other.

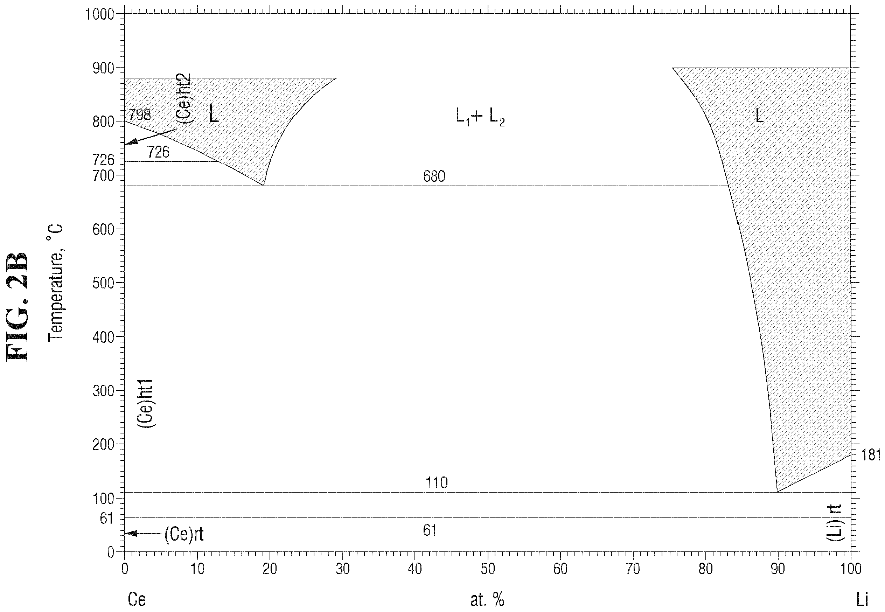

FIG. 2B shows a Lithium-Cerium (Li-Ce) phase diagram.

Referring to FIG. 2B, the Li-Ce phase diagram can be utilized to identify a eutectic temperature and a eutectic composition of a Li-Ce alloy. For example, the Li-Ce phase diagram shows that the eutectic composition is about 90% Li and about 10% Ce and that the eutectic temperature is about 110°C, which is lower than the melting temperature of pure Lithium (e.g., 181°C). Accordingly, a Li-Ce alloy may be the metal alloy utilized in the anode active 125, the anode interlayer 121, and/or the anode coating 122 based on the eutectic point criteria. In some embodiments, the Li-Ce alloy may include about 90% Li and about 10% Ce by weight of the Li-Ce alloy.

At room temperature, a eutectic composition of a Lithium alloy may behave more as a liquid than pure Lithium. When the eutectic temperature is greater than room temperature, a homologue temperature T_{H} (e.g., a ratio of room temperature (°K) and the eutectic temperature (°K): T_{H}=298K/T_{eutectic} > 0.65) may be closer to 1. When a material has a homologue temperature T_{H} closer to 1, certain physical properties are expected to change. For example, viscosity and surface tension may decrease toward values that viscosity and surface tension would have in a pure liquid state. In some embodiments, the metal alloy utilized for anode active 125, the anode interlayer 121, and/or the anode coating 122 may have a homologue temperature greater than about 0.65.

An element that alloys with Lithium can be defined as lithophilic, which indicates thermodynamic and chemical similarities. Lithophilic elements may be selected based on their solubility with Lithium. However, the eutectic criteria do not require that an element be soluble in Lithium. In contrast, the eutectic criteria considers whether elements have a eutectic point. For example, Cerium (Ce) is not soluble in Lithium between about 30% and 75% of Li by atomic weight but forms a eutectic point when alloyed with Li and satisfies the eutectic criteria.

In some embodiments, the anode active 125 may have a Lithium content (e.g., amount) greater than about 70% by atomic weight in order to provide enough capacity for the battery 100. In some embodiments, the anode coating 122 may have a Lithium content (e.g., amount) in a range of about 5% to about 95% by atomic weight. Here, most of the Lithium capacity in the anode 120 should be given by the anode active 125 (e.g., Lithium metal accumulated in the pores 124 of the anode base 123 (e.g., not in the anode coating 122)). In some embodiments, the anode interlayer 121 may have a Lithium content (e.g., amount) in a range of about 5% to about 95% by atomic weight. However, smaller amounts of Lithium composition in the anode interlayer 121 could be detrimental during cycling of the battery as the alloy might host more Lithium and can lead to volume change of the interlayer with subsequent loss of contact.

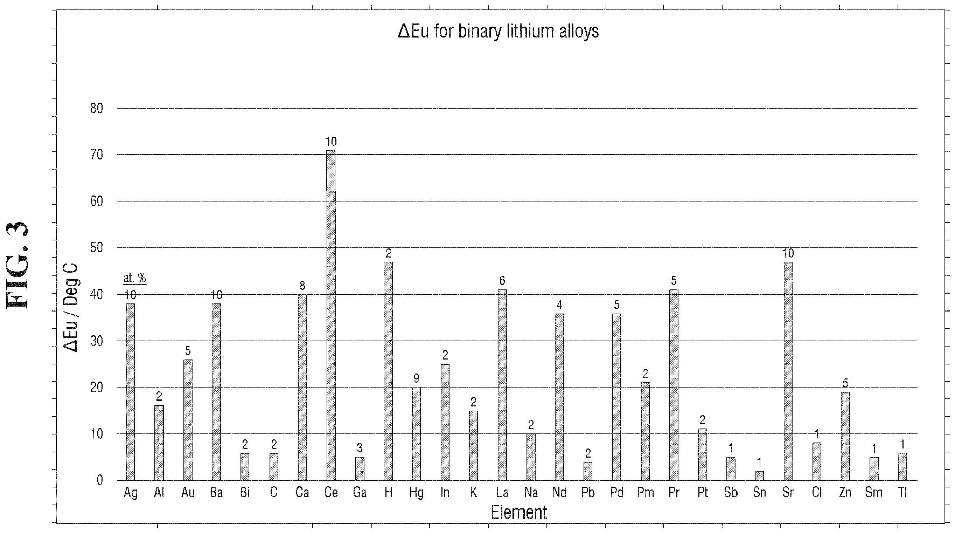

FIG. 3 is a graph showing Lithium alloying elements that have a eutectic temperature lower than the melting temperature of Lithium.

Referring to FIG. 3, the graph shows the absolute difference between the eutectic temperature and Lithium melting temperature as ΔEu for one or more Lithium alloying elements that meet the eutectic point criteria. Accordingly, Lithium alloys that include these elements may be utilized for the anode active 125, the anode interlayer 121, and the anode coating 122 according to one or more suitable embodiments of the present disclosure. The data included in the graph was gathered by reviewing publicly available Lithium binary phase diagrams. Further, the graph displays the percent composition of each of the elements in the alloy that produced the measured eutectic temperature. For example, the graph shows that a Li-Ce alloy of about 90% Li and about 10% Ce produces a ΔEu of about 70°C.

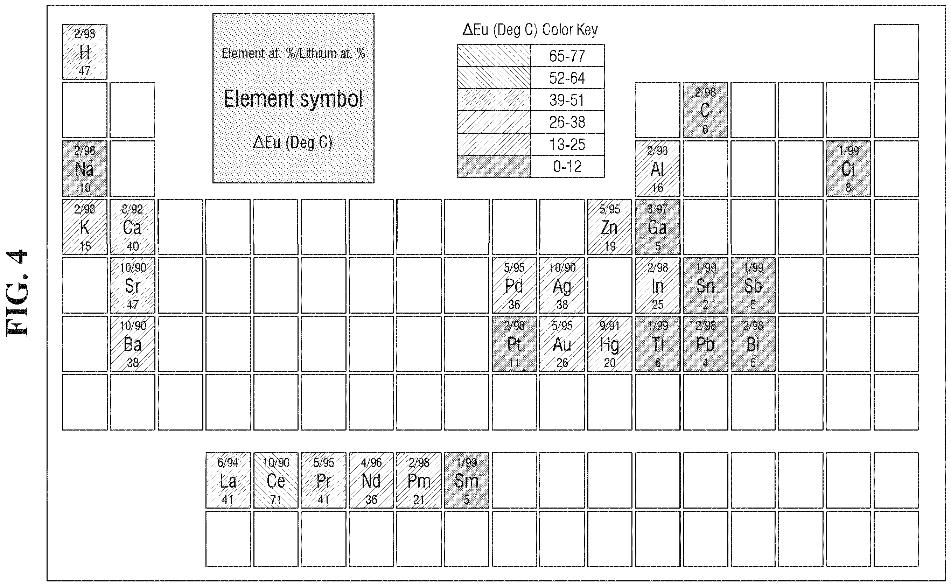

FIG. 4 shows a modified image of a periodic table that includes elements with a high ΔEu according to an embodiment of the present disclosure.

Referring to FIG. 4, the periodic table color-codes indicate the absolute difference between the eutectic temperature and Lithium melting temperature (ΔEu) for one or more suitable Lithium alloying elements that meet the eutectic point criteria. For example, the alloying elements with the lowest ΔEu are color-coded as red and the alloying elements with the highest ΔEu are color-coded as green. The periodic table includes the same alloying elements as those included in the graph of FIG. 3. The data utilized to color-code the periodic table was gathered by reviewing publicly available Lithium binary phase diagrams. Further, the periodic table displays the eutectic composition of the Lithium alloy that produced the measured eutectic temperature. For example, the periodic table shows a Li-Ce alloy of about 90% Li and about 10% Ce as color-coded green because its ΔEu is about 70°C. As shown by the graph in FIG. 3 and the periodic table in FIG. 4, Cerium has the highest ΔEu and the homologue temperature T_{H} closest to 1.

Further, the graph in FIG. 3 and the periodic table in FIG. 4 show multiple Lithium alloys that satisfy the eutectic point criteria and, thus, may be suitable for the anode active 125, the anode interlayer 121, and the anode coating 122. For example, suitable Lithium alloys may include, but are not limited to, a Lithium-Silver alloy, a Lithium-Cerium alloy, a Lithium-Hydrogen alloy, a Lithium-Lanthanum alloy, a Lithium-Strontium alloy, and/or a Lithium-Praseodymium alloy.

Additionally, the suitable Lithium alloys are not limited to the alloys shown in FIGS. 3 and 4. Other suitable Lithium alloys that meet the eutectic point criteria may also be identified utilizing other methods. For example, machine learning algorithms (e.g., MeltNet as described in Pin-Wen Guan and Venkatasubramanian Viswanathan, MeltNet: Predicting Alloy Melting Temperature by Machine Learning, Oct. 28, 2020, https://arxiv.org/pdf/2010.14048.pdf, the entire content of which is incorporated herein by reference) may be utilized to predict eutectic point for binary compounds. Further, the machine learning algorithms may also be utilized to predict eutectic points for ternary and quaternary alloys as well.

Also, the eutectic point criteria is not limited to use with Lithium metal batteries. For example, the eutectic point criteria may be used in various metal battery systems (e.g., other alkali metal systems such as Sodium and Potassium) to select suitable metal alloys for the anode active 125, the anode layer 121, and the anode coating 122.

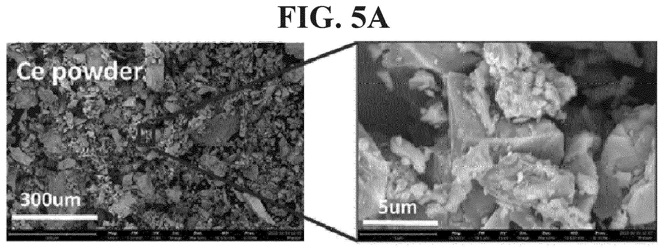

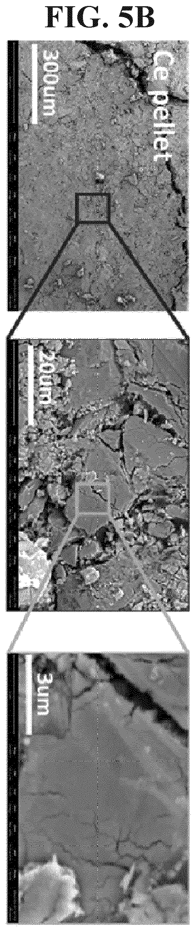

FIG. 5A shows microscopic images of Cerium powder. FIG. 5B shows microscopic images of Cerium pellet.

Referring to FIGS. 5A and 5B, the properties of Cerium powder and Cerium pellet can be compared. For example, Ce powder includes polydispersed dimension particles, whereas a pure Ce pellet includes cracks and may be brittle. Accordingly, it may be difficult to form a Li-Ce alloy that has about 90% Li and about 10% Ce by melting Lithium. In some embodiments, Li-Ce alloy can be formed by utilizing Ce in powder form and utilizing electrochemical methods.

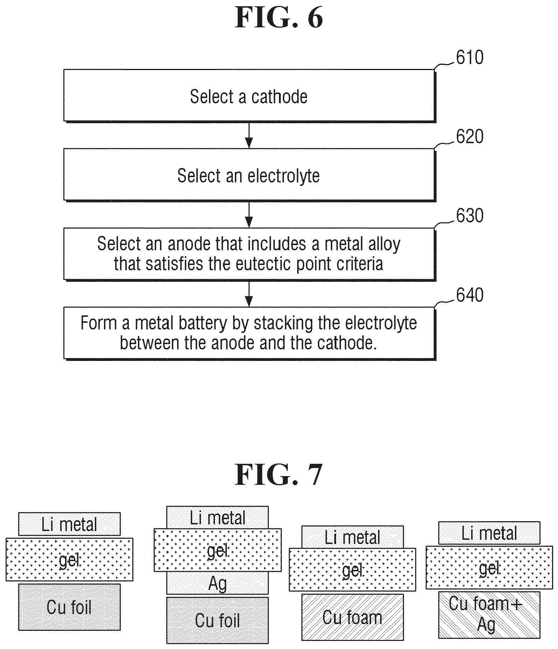

FIG. 6 is a flowchart for forming a metal battery according to an embodiment of the present disclosure. According to some example embodiments, the number and order of operations illustrated in FIG. 6 may vary. For example, according to some example embodiments, there may be fewer or additional operations, unless otherwise stated or implied to the contrary. Additionally, the order of the operations may vary, unless otherwise stated or implied to the contrary.

Referring to FIG. 6, a method for forming a metal battery may include selecting a cathode in 610. This may include selecting any suitable material utilized for a cathode. Additionally, an electrolyte may be selected in 620. In some embodiments, the electrolyte may include a liquid electrolyte or a solid electrolyte (e.g., solid-state electrolyte). In 630, an anode may be selected that satisfies the eutectic point criteria. In some embodiments, the anode may include an anode active, an anode base having a plurality of pores, an anode interlayer, and an anode coating. The eutectic point criteria may include selecting a metal alloy that has a eutectic temperature that is lower than the melting point of pure Lithium. In some embodiments, the metal alloy may include a Lithium-Silver alloy. In some embodiments, the Lithium-Silver alloy may include about 90% Lithium and about 10% Silver by weight of the Lithium-Silver Alloy. In some embodiments, the metal alloy may include a Lithium-Cerium alloy. In some embodiments, the Lithium-Cerium alloy may include about 90% Lithium and about 10% Cerium. In 640, the battery may be formed by stacking the electrolyte between the anode and the cathode.

Hereinafter, the present disclosure will be described in more detail through examples of the preparation of the aforementioned metal battery. However, embodiments of the present disclosure are not restricted by the following examples.

### EXAMPLE 1

In this example, one or more suitable metal battery cell configurations were utilized to study the ability to lithiate Silver (Ag) nanoparticles utilizing electrochemistry (e.g., form Lithium-Silver alloys utilizing electrochemistry). FIG. 7 shows images of different metal battery cell configurations that were observed. Referring to FIG. 7, the cell configurations include an anode that has a copper (Cu) foil, a Cu foil with a Ag nanoparticle layer on top of the Cu foil, a Cu foam, and a Cu foam with an Ag nanoparticle layer on top of the Cu foam.

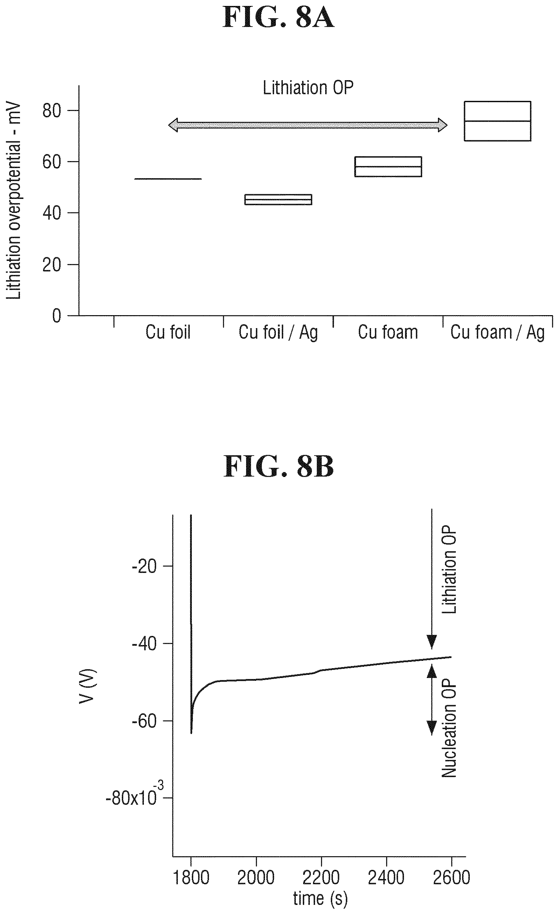

FIG. 8A shows a chart of lithiation overpotential measurements for each of the metal battery cell configurations observed in Example 1. FIG. 8B shows a graph of lithiation overpotential and Lithium nucleation overpotential measurements in Example 1 over time. Referring to FIGS. 8A and 8B, the lithiation overpotential was measured when Lithium is deposited for each of the different cell configurations. The measurements are included in the graph shown in FIG. 8A. The measurements were compared to the Lithium overpotential measurements in FIG. 8B. FIG. 8B is a graph showing an example of the voltage profile associated with Lithium deposition in time, which proceeds in two steps (or tasks): (1) Li nucleation signaled by the negative peak at the beginning; and (2) Li plating (e.g., lithiation). The lithiation overpotential for each of the cell configurations was similar, so the presence of Ag did not significantly affect the lithiation overpotential.

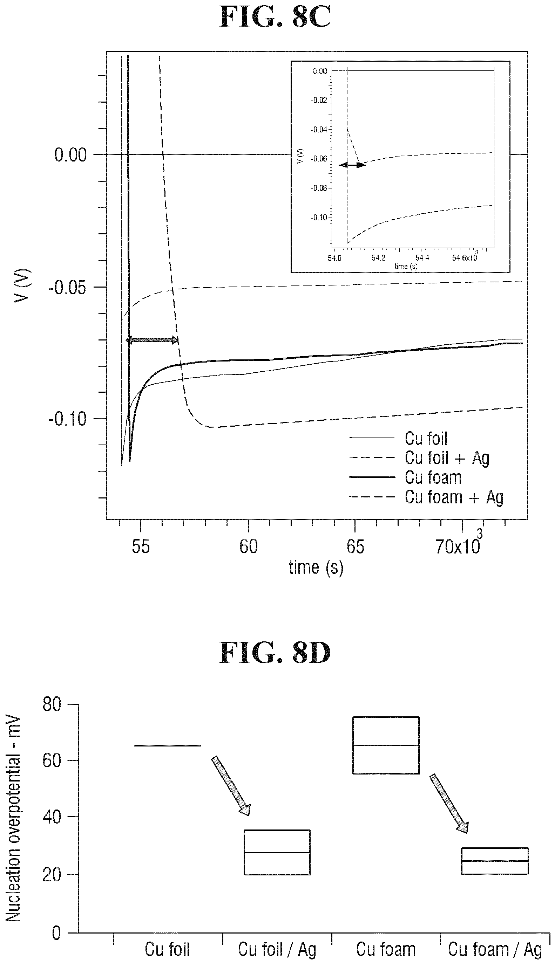

Additionally, the Lithium nucleation overpotential was observed when Lithium is deposited for the different cell configurations. FIG. 8C shows a graph of nucleation overpotential measurements for each of the metal battery cell configurations observed in Example 1. FIG. 8D shows a chart of nucleation overpotential measurements for each of the metal battery cell configurations observed in Example 1. Referring to FIG. 8C and 8D, the results are included in the graphs shown in FIGS. 8C and 8D. As shown in the results, Ag reduces the nucleation overpotential by about 40 mV. This shows that Ag acts as a lithiophilic layer on top of the anode. Further Li and Ag have a lower interfacial energy barrier compared with Li and bare Cu, which results in the decreased nucleation overpotential. Additionally, the peak in FIG. 8C has shifted right, which shows a more homogenous deposition of Li across the Ag layer.

### EXAMPLE 2

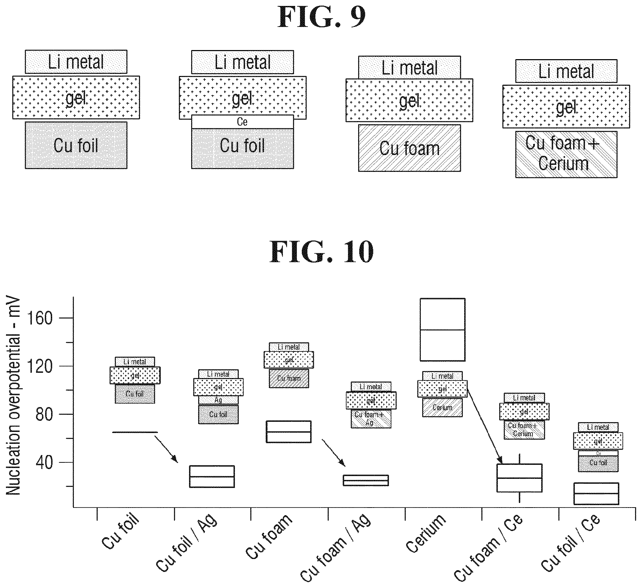

In this example, one or more suitable metal battery cell configurations were utilized to study the ability to lithiate Cerium (Ce) nanoparticles utilizing electrochemistry (e.g., form Lithium-Cerium alloys utilizing electrochemistry). FIG. 9 shows metal battery cell configurations observed in Example 2. Referring to FIG. 9, the cell configurations include anodes that have a copper (Cu) foil (as its anode base), a Cu foil with a Ce nanoparticle layer on top of the Cu foil, a Cu foam (as its anode base), and a Cu foam with a Ce nanoparticle layer on top of the Cu foam.

The nucleation overpotential of Li was observed when Lithium is deposited for the different cell configurations. FIG. 10 shows a chart of nucleation overpotential measurements for each of the metal battery cell configurations observed in Example 2. The results are included in the chart shown in FIG. 10. As illustrated in the chart, Ce powder behaves similarly to Ag by providing a similar nucleation overpotential and a lithiophilic layer. Additionally, the cells with Ce powder on top of Cu foam and Cu foil reduce the overpotential compared to Cu foam and Cu foil by about 40 mV. Additionally, the cells with Ce powder on top of Cu foam and Cu foil reduce the overpotential compared to Ce pellet by about 100 mV.

As utilized herein, the term "substantially," "about," and similar terms are utilized as terms of approximation and not as terms of degree, and are intended to account for the inherent deviations in measured or calculated values that would be recognized by those of ordinary skill in the art. "About" or "approximately," as utilized herein, is inclusive of the stated value and refers to within an acceptable range of deviation for the particular value as determined by one of ordinary skill in the art, considering the measurement in question and the error associated with measurement of the particular quantity (i.e., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The utilize of "may" when describing embodiments of the present disclosure refers to "one or more embodiments of the present disclosure."

As utilized herein, the singular forms "a", "an" and "the" are intended to include the plural forms as well, unless the context clearly indicates otherwise.

As utilized herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the one or more suitable components of the device may be formed on one integrated circuit (IC) chip or on separate IC chips. Further, the one or more suitable components of the device may be implemented on a flexible printed circuit film, a tape carrier package (TCP), a printed circuit board (PCB), or formed on one substrate. Further, the one or more suitable components of the device may be a process or thread, running on one or more processors, in one or more computing devices, executing computer program instructions and interacting with other system components for performing the one or more suitable functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the following claims.

## Claims

1. A metal battery comprising:
a cathode;
an anode; and
an electrolyte between the cathode and the anode;
wherein the anode comprises a metal alloy comprising a plurality of elements and the metal alloy has a melting temperature lower than melting temperatures of each of the plurality of elements.

2. The metal battery of claim 1, wherein the anode comprises an anode active, an anode interlayer, and an anode coating.

3. The metal battery of claim 2, wherein the anode active, the anode interlayer, and the anode coating comprise the metal alloy.

4. The metal battery of any one of claims 1 to 3, wherein the electrolyte comprises a solid-state electrolyte.

5. The metal battery of any one of claims 1 to 4, wherein the metal alloy comprises a Lithium-Silver alloy.

6. The metal battery of claim 5, wherein the Lithium-Silver alloy comprises about 90% Lithium and about 10% Silver by weight of the Lithium-Silver alloy.

7. The metal battery of any one of claims 1 to 4, wherein the anode comprises a Lithium-Cerium alloy.

8. The metal battery of claim 7, wherein the Lithium-Cerium alloy comprises about 90% Lithium and about 10% Cerium by weight of the Lithium-Cerium alloy.

9. The metal battery of any one of claims 1 to 8, wherein the metal alloy has a homologue temperature greater than 0.65.

10. A method for forming a metal battery comprising an anode, a cathode, and an electrolyte, the method comprising:
selecting a cathode;
selecting an electrolyte;
selecting an anode comprising a metal alloy comprising a plurality of elements and the metal alloy has a melting temperature lower than melting temperatures of each of the plurality of elements; and
stacking the electrolyte between the anode and the cathode to form the metal battery.

11. The method of claim 10, wherein the anode further comprises an anode active, an anode interlayer, and an anode coating.

12. The method of claim 10 or 11, wherein the electrolyte comprises a solid-state electrolyte.

13. The method of any one of claims 10 to 12, wherein the metal alloy comprises a Lithium-Silver alloy.

14. The method of any one of claims 10 to 13, wherein the metal alloy comprises a Lithium-Cerium alloy.

15. An anode for a Lithium metal battery comprising:
an anode active;
an anode interlayer; and
an anode coating, wherein the anode active, the anode interlayer, and the anode coating comprise a Lithium alloy comprising a composition with a melting temperature lower than a melting temperature of pure Lithium.
